# EUROPÄISCHE PATENTANMELDUNG

(11) **EP 1 818 582 A1**
(43) Veröffentlichungstag der Anmeldung: **15.08.2007**
(21) Anmeldenummer: 06002908.9
(22) Anmeldetag: 14.02.2006
(51) Int. Cl.: F16J 15/32

(54) **Dichtungsanordnung**

(71) Anmelder: Carl Freudenberg KG, 69469 Weinheim (DE)
(72) Erfinder: Röhner, Gerhard, 69502 Hemsbach (DE); Schreiner, Peter, 67117 Limburgerhof (DE)

(57) **Zusammenfassung**

Dichtungsanordnung, umfassend zwei Radialwellendichtringe (1, 2), die eine abzudichtende Oberfläche (3) eines abzudichtenden ersten Maschinenelements (4) mit jeweils zumindest einer Dichtlippe (5, 6) dichtend berühren, wobei die Radialwellendichtringe (1, 2) axial zueinander benachbart und mit ihren jeweiligen Rücken (7, 8) aneinander liegend angeordnet sind, zur Abdichtung von zwei axial zueinander benachbart angeordneten, jeweils mit einem flüssigen, abzudichtenden Medium (9, 10) befüllten, abzudichtenden Räumen (11, 12), wobei zwischen den Rücken (7, 8) eine Belüftungsleitung (13) angeordnet ist und ein Sensor (14) zur Detektierung von Leckage aus den Räumen (11, 12), wobei der Sensor (14) durch einen Sensoranschluss (15) signalleitend mit einer elektronischen Auswerteinheit (16) verbunden ist.

## Beschreibung

### Technisches Gebiet

Die Erfindung betrifft eine Dichtungsanordnung zur Abdichtung von zwei axial zueinander benachbart angeordneten, jeweils mit einem flüssigen, abzudichtenden Medium befüllten, abzudichtenden Räumen.

### Stand der Technik

Derartige Dichtungsanordnungen sind allgemein bekannt und können beispielsweise Sensoren zur Detektierung von Leckage aus den Räumen umfassen, wobei es sich bei den vorbekannten Sensoren um aufwendige optische Systeme handelt, die einen großen Einbauraum benötigen. Außerdem ist von Nachteil, dass optische Sensoren für Temperaturbereiche > 100 °C Umgebungstemperatur nicht geeignet sind.

### Darstellung der Erfindung

Der Erfindung liegt die Aufgabe zugrunde, eine Dichtungsanordnung der vorbekannten Art derart weiterzuentwickeln, dass die Detektierung von Leckage technisch weniger aufwendig und kostengünstiger durchführbar ist und dass die Möglichkeit einer Detektierung von Leckage auch in Temperaturbereichen >100°C Umgebungstemperatur besteht.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist eine Dichtungsanordnung vorgesehen, umfassend zwei Dichtringe, die eine abzudichtende Oberfläche eines abzudichtenden Maschinenelements mit jeweils zumindest einer Dichtlippe dichtend berühren, wobei die Dichtringe mit ihren jeweiligen Rücken aneinanderliegend angeordnet sind, zur Abdichtung von zwei axial zueinander benachbart angeordneten, jeweils mit einem flüssigen, abzudichtenden Medium befüllten, abzudichtenden Räumen, wobei zwischen den Rücken eine Belüftungsleitung angeordnet ist und ein Sensor zur Detektierung von Leckage aus den Räumen, wobei der Sensor durch einen Sensoranschluss signalleitend mit einer elektronischen Auswerteinheit verbunden ist. Die Dichtringe können zum Beispiel als Radiatweiiendichtringe, Labyrinthdichtringe oder Gleitringdichtungen ausgebildet sein. Bevorzugt ist der Sensoranschluss in der Belüftungsleitung angeordnet. Hierbei ist von Vorteil, dass die Dichtungsanordnung einen einfachen Aufbau aufweist und dadurch kostengünstig herstellbar ist. Durch die Anordnung des Sensoranschlusses in der Belüftungsleitung ist der Sensoranschluss gut vor unerwünschten äußeren Einflüssen geschützt und die. Detektierung von Leckage ist während einer langen Gebrauchsdauer zuverlässig gewährleistet.

Der Sensor besteht bevorzugt aus einer Anordnung von elektrischen Leitem an einem Vliesstoffring. Solche Sensoren sind in vielen unterschiedlichen Größen einfach und kostengünstig herstellbar und, im Vergleich zu optischen Systemen, weniger aufwendig. Eine Detektierung von Leckage auch in Temperaturbereichen > 100 °C Umgebungstemperatur ist zuverlässig möglich.

An dem Vliesstoffring kann stirnseitig beiderseits jeweils eine Elektrode anliegen. Alternativ können an dem Vliesstoffring stirnseitig einseitig zwei Elektroden anliegen. Diese können kammartig ausgebildet sein. Bei einem vom abzudichtenden Medium angefeuchteten Vliesstoffring wird die Strecke zwischen den beiden Elektroden leitend und/oder ihre Kapazität ändert sich, wobei die Leckage mittels des Sensoranschlusses an die elektronische Auswerteinheit gemeldet wird. Durch einen Kapillareffekt saugt der Vliesstoffring die Leckage auf.
Durch den einfachen, robusten Aufbau ist eine solche Dichtungsanordnung auch für hohe Umgebungstemperaturen von über 100 °C bestens geeignet. Durch die Detekierung von Leckage wird verhindert, dass das abzudichtende Medium des einen Raums in den abzudichtenden anderen Raum eindringt, was insbesondere dann von Nachteil ist, wenn sich die beiden gegeneinander abzudichtenden Medien voneinander unterscheiden.

Im Hinblick auf einen einfachen und kostengünstigen Aufbau der Dichtungsanordnung ist von Vorteil, wenn der Vliesstoffring und die beiden Elektroden eine vormontierbare Einheit bilden. Diese vormontierbare Einheit kann als Ganzes in der Dichtungsanordnung montiert werden und mittels des Sensoranschlusses, der bevorzugt in der Belüftungsleitung angeordnet ist, signalleitend mit der elektronischen Auswerteinheit verbunden werden.

Die Belüftungsleitung kann ein zweites Maschinenelement durchdringen und in die Atmosphäre münden. Die Belüftungsleitung stellt sicher, dass die jeweiligen Dichtlippen der jeweiligen Radialwellendichtringe auf den jeweils dem abzudichtenden Raum axial abgewandten Seiten nicht mit einem von der Atmosphäre abweichenden Druck beaufschlagt werden und dadurch beispielsweise unerwünscht von der abzudichtenden Oberfläche abheben oder unerwünscht stark an diese angepasst werden. Das würde zu einer hohen Leckage oder einem unerwünscht hohen Verschleiß und dadurch zu einem vorzeitigen Ausfall der Dichtungsanordnung führen. Die Schaltung der Auswerteinheit ist derart gestaltet, dass durch eine Kombination der Messung von Widerstand und Kapazität der Sensoranordnung zwischen einer Leckage der verschiedenen Medien unterschieden werden kann.

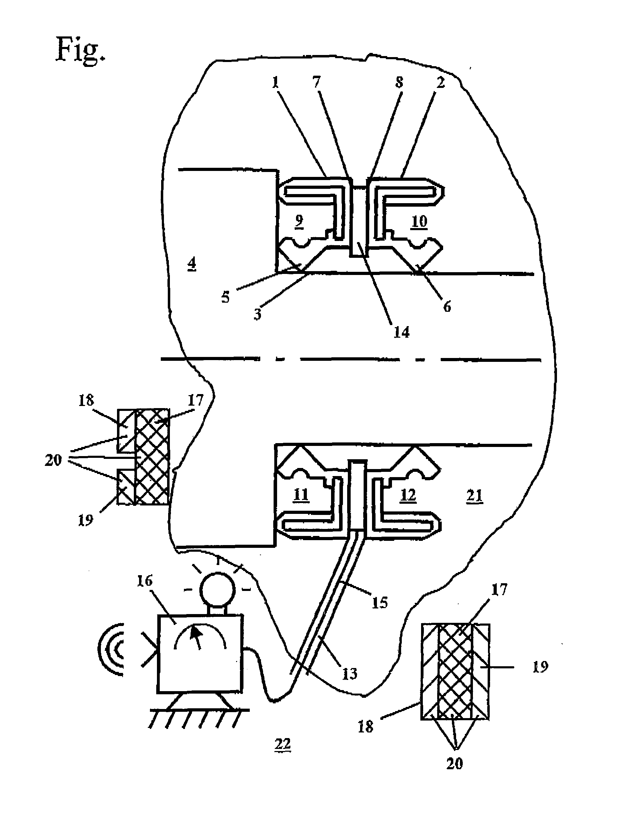

### Kurzbeschreibung der Zeichnung

Ein Ausführungsbeispiel der erfindungsgemäßen Dichtungsanordnung wird nachfolgend anhand der als Anlage beigefügten Zeichnung näher erläutert.

Die Figur zeigt ein Ausführungsbeispiel der erfindungsgemäßen Dichtungsanordnung in schematischer Darstellung.

### Ausführung der Erfindung

Bei der dargestellten Dichtungsanordnung ist innerhalb des ersten Raums 11 als abzudichtendes Medium 9 Öl und innerhalb des zweiten Raums 12 als abzudichtendes Medium 10 Kühlmittel angeordnet. Während der bestimmungsgemäßen Verwendung der Dichtungsanordnung muss in jedem Fall sichergestellt sein, dass ein Eindringen des Kühlmittels am zweiten Radialwellendichtring 2 und dem ersten Radialwellendichtring 1 vorbei in den ersten Raum 11 verhindert wird.

Im dargestellten Ausführungsbeispiel weist der zweite Radialwellendichtring 2 eine Hilfsdichtlippe 23 auf, die der Dichtlippe 5 auf der dem abzudichtenden Raum 12 axial abgewandten Seite mit axialem Abstand benachbart zugeordnet ist. Die Dichtlippe 5 und die Hilfsdichtlippe 23 bilden zusammen mit der Oberfläche 3 des abzudichtenden ersten Maschinenelements 4, das hier als Welle ausgebildet ist, eine Schmiermitteltasche 24, die mit einem Sperrfett 25 befüllt ist,

Die beiden Radialwellendichtringe 1, 2 sind axial zueinander benachbart angeordnet und berühren sich mit ihren Rücken 7, 8 anliegend.
In einem Umfangsbereich zwischen den einander zugewandten Rücken 7, 8 ist eine sich radial erstreckende Belüftungsleitung 13 angeordnet, durch die ein Sensoranschluss 15 geführt ist, wobei der Sensoranschluss 15 einerseits mit dem Sensor 14 und andererseits mit der elektronischen Auswerteinheit 16 signalleitend verbunden ist. Im dargestellten Ausführungsbeispiel ist der Sensor 14 als VliesstQffring 17 ausgebildet und radial innenseitig der Dichtungsanordnung angeordnet und berührt die abzudichtende Oberfläche 3 des abzudichtenden ersten Maschinenelements 4 anliegend. Axial beiderseits ist auf den Stirnseiten des Vliesstoffrings 17 jeweils eine Elektrode 18, 19 angeordnet, wobei der Vliesstoffring 17 und die Elektroden 18, 19 eine vormontierbare Einheit 20 bilden.
Dringt beispielsweise abzudichtendes Medium 10 aus dem abzudichtenden Raum 12 an der Dichtlippe 6 des zweiten Radialwellendichtrings 2 vorbei in Richtung des ersten Radialwellendichtrings 1 aus, nimmt der Vliesstoffring 17 die Leckage von der abzudichtenden Oberfläche 3 auf. Die Strecke innerhalb des Vliesstoffrings 17 zwischen den beiden Elektroden 18, 19 wird mit der Leckage getränkt, so dass die Strecke zwischen den beiden Elektroden 18, 19 elektrisch leitend wird. Dadurch wird auf der elektronischen Auswerteinheit 16 die Leckage optisch und/oder akustisch angezeigt.

## Patentansprüche

1. Dichtungsanordnung, umfassend zwei Dichtringe (1, 2), die eine abzudichtende Oberfläche (3) eines abzudichtenden ersten Maschinenelements (4) mit jeweils zumindest einer Dichtlippe (5, 6) dichtend berühren, wobei die Dichtringe (1, 2) axial zueinander benachbart und mit ihren jeweiligen Rücken (7, 8) aneinander liegend angeordnet sind, zur Abdichtung von zwei axial zueinander benachbart angeordneten, jeweils mit einem flüssigen, abzudichtenden Medium (9, 10) befüllten, abzudichtenden Räumen (11, 12), wobei zwischen den Rücken (7, 8) eine Belüftungsleitung (13) angeordnet ist und ein Sensor (14) zur Detektierung von Leckage aus den Räumen (11, 12), wobei der Sensor (14) durch einen Sensoranschluss (15) signalleitend mit einer elektronischen Auswerteinheit (16) verbunden ist.

2. Dichtungsanordnung nach Anspruch 1, **dadurch gekennzeichnet, dass** der Sensoranschluss (15) in der Belüftungsleitung (13) angeordnet ist.

3. Dichtungsanordnung nach einem der Ansprüche 1 oder 2, **dadurch gekennzeichnet, dass** der Sensoranschluss (15) mit einem als Vliesstoffring (17) ausgebildeten Sensor (14) signalleitend verbunden ist.

4. Dichtungsanordnung nach Anspruch 3, **dadurch gekennzeichnet, dass** an dem Vliesstoffring (17) stirnseitig beiderseits, jeweils eine Elektrode (18, 19) anliegt.

5. Dichtungsanordnung nach Anspruch 3, **dadurch gekennzeichnet, dass** an dem Vliesstoffring (17) stirnseitig einseitig zwei Elektroden (18, 19) anliegen.

6. Dichtungsanordnung nach einem der Ansprüche 4 oder 5, **dadurch gekennzeichnet, dass** der Vliesstoffring (17) und die Elektroden (18, 19) eine vormontierbare Einheit (20) bilden,

7. Dichtungsanordnung einem der Ansprüche 1 bis 6, **dadurch gekennzeichnet, dass** die Belüftungsleitung (13) ein zweites Maschinenelement (21) durchdringt und in die Atmosphäre (22) mündet.
